# EUROPÄISCHE PATENTANMELDUNG

(11) **EP 4 623 678 A1**
(43) Veröffentlichungstag der Anmeldung: **01.10.2025**
(21) Anmeldenummer: 24166990.2
(22) Anmeldetag: 27.03.2024
(51) Int. Cl.: A01K 1/00

(54) **TRENNRAHMEN-VORRICHTUNG FÜR STALLBOXEN**

(71) Anmelder: Zimmermann Stalltechnik GmbH, 88436 Eberhardzell (DE)
(72) Erfinder: Zimmermann, Erwin, 88436 Eberhardzell-Ritzenweiler (DE)
(74) Vertreter: Kiessling, Christian

(57) **Zusammenfassung**

Bei einer Trennrahmen-Vorrichtung (100) für Stallboxen (200) zur Haltung von Stalltieren, mit einem zu einem Trennrahmen (110) gebogenen, in eine Mehrzahl unterschiedlicher Rahmenabschnitte (121, 122) unterteilten Holm (113, 114) wird eine tiergerechtere Haltung als im Stand der Technik dadurch erreicht, dass ein oberer Trennholm (113) und ein unterer Trennholm (114) in einem der Bodenbefestigung (140) nahen ersten Rahmenabschnitt (121) parallel zueinander geführt sind und dabei lediglich so weit von einer Liegefläche (150) eines Stalltieres beabstandet sind, um ein freies Verschwenken des Kopfes des Stalltieres oberhalb des ersten Rahmenabschnittes (121) zu ermöglichen, wobei in einem zweiten Rahmenabschnitt (122) der obere Trennholm (113) und der untere Trennholm (114) so weit von einer Liegefläche (150) des Stalltieres beabstandet sind, um ein wiederholtes Aufstehen, freies Stehen und anschließendes Hinlegen des Stalltieres innerhalb der Stallbox (200) sowie eine uneingeschränkte Bewegung des Stalltieres innerhalb der Stallbox (200) zu ermöglichen.

## Beschreibung

Die Erfindung betrifft eine Trennrahmen-Vorrichtung für Stallboxen zur Haltung von Stalltieren, insbesondere Kühen, mit einem zu einem Trennrahmen gebogenen, in eine Mehrzahl unterschiedlicher Rahmenabschnitte unterteilten Holm, der mittels seitlichen Biegens seiner beiden Enden einen Seitenversatz aufweist derart, dass die beiden Enden im Bereich einer Bodenbefestigung nebeneinander zu liegen kommen und im Bereich jeweiliger, im Wesentlichen vertikal ausgerichteter Stützholme nebeneinander in der Bodenbefestigung verankert sind, wobei der Trennrahmen einen oberen Trennholm und einen zu diesem in vorgegebenem Abstand angeordneten unteren Trennholm aufweist, die über eine der Bodenbefestigung ferne Umkehrbiegung miteinander verbunden sind.

Trennrahmen-Vorrichtungen eingangs genannter Art werden im Stand der Technik verwendet, um zumindest vorrübergehend in einem Stall gehaltenen Stalltieren ein von einer Stallbox gebildetes geschütztes und gesichertes Areal zur Verfügung zu stellen, in dem sie ungestört ruhen, ruminieren und schlafen können.

Die bekannten Trennrahmen-Vorrichtungen weisen indes den Nachteil auf, dass eine artgerechte Haltung insofern erschwert ist, dass zum einen eine freie Bewegung insbesondere des Kopfes eines Stalltieres innerhalb der Stallbox verhindert ist und zum anderen eine uneingeschränkte Bewegung des Stalltieres innerhalb der Stallbox unter Ausnutzung des gesamten Areals der Stallbox nicht gewährleistet ist. Letzteres macht sich unter anderem dadurch bemerkbar, dass lediglich ein relativ begrenzter Anteil des Areals der Stallbox mit Kot bedeckt ist, so dass ein betreffendes Stalltier u.a. gezwungen ist, im eigenen Kot zu liegen.

Aufgabe der Erfindung ist es deshalb, eine Trennrahmen-Vorrichtung zu schaffen, mit deren Hilfe eine artgerechtere Haltung von Stalltieren als im Stand der Technik ermöglicht ist.

Für eine Trennrahmen-Vorrichtung eingangs genannter Art wird diese Aufgabe erfindungsgemäß dadurch gelöst, dass der obere Trennholm und der untere Trennholm in einem der Bodenbefestigung nahen ersten Rahmenabschnitt parallel zueinander geführt sind und dabei lediglich so weit von einer Liegefläche eines Stalltieres beabstandet sind, um ein freies Verschwenken des Kopfes des Stalltieres auch oberhalb des ersten Rahmenabschnittes zu ermöglichen, und in einem zweiten Rahmenabschnitt der obere Trennholm und der untere Trennholm so weit von einer Liegefläche des Stalltieres beabstandet sind, um ein wiederholtes Aufstehen, freies Stehen und anschließendes Hinlegen des Stalltieres innerhalb der Stallbox sowie eine uneingeschränkte Bewegung des Stalltieres innerhalb der Stallbox zu ermöglichen.

Bevorzugte Ausführungsformen der Erfindung sind Gegenstand der Unteransprüche, deren Elemente im Sinne einer weiteren Verbesserung des Lösungsansatzes der der Erfindung zugrunde gelegten Aufgabe wirken.

Bei der erfindungsgemäßen Trennrahmen-Vorrichtung wird mittels der Merkmalskombination des kennzeichnenden Teils des Patentanspruchs 1 in Verbindung mit den Merkmalen von dessen Oberbegriff erreicht, dass sowohl eine freie Bewegung insbesondere des Kopfes eines Stalltieres innerhalb der Stallbox ermöglicht ist, und zum anderen eine uneingeschränkte Bewegung des Stalltieres innerhalb der Stallbox unter Ausnutzung des gesamten Areals der Stallbox gewährleistet ist. Dies macht sich insbesondere dadurch bemerkbar, dass das gesamte Areal der Stallbox sauber und nicht verkotet ist.

Die Vorteile der Erfindung lassen sich summarisch wie folgt zusammenfassen:
- Einem Stalltier wird maßgeblich mehr Bewegungsfreiheit in seinem Liegebereich als im Stand der Technik ermöglicht.
- Die Erfindung stellt ein tiergerechtes Hinlegen und Aufstehen der Kuh sicher. Der Kopf-Halsschwung und sonstige Kopfbewegungen, wie sie in freier Natur Teil eines natürlichen Bewegungsablaufs beim Aufstehen und Hinlegen sind, sind artgerechter und für das Stalltier komfortabler als im Stand der Technik möglich. Ein Stalltier kann somit sein Verhalten genauso ausleben, wie es dies auf der Weide tun würde.
- Die Erfindung gewährleistet, dass ein Stalltier aufrecht in seiner Stallbox stehen kann, ohne von störenden Elementen behindert zu werden, wobei ein Verkoten der Liegefläche durch das Tier selbst vermieden wird.
- Mit der Erfindung kann garantiert werden, dass ein Stalltier weder beim Hinlegen noch beim Liegen, sowie beim Aufstehen einer Berührung mit der Trennrahmen-Konstruktion ausgesetzt ist, so dass alle Bewegungsabläufe in der Stallbox den Bewegungen in freier Natur entsprechen.
- Ein Stalltier wird mittels der Erfindung nur noch gelenkt und auf seinen gewünschten Liegebereich hin positioniert, wobei ein unbehindertes und freies Liegen, so wie es auf der Weide stattfindet, dem Tierwohl sehr zuträglich ist.

Gemäß einer ersten bevorzugten Ausführungsform der erfindungsgemäßen Trennrahmen-Vorrichtung ist vorgesehen, dass die Länge des ersten Rahmenabschnittes auf 1/4 bis 1/2 der Länge des zweiten Rahmenabschnittes bemessen ist.

Des Weiteren ist der erste Rahmenabschnitt bezüglich der Bodenbefestigung vorzugsweise in einem spitzen Winkel zur Liegefläche angeordnet.

Gemäß einer weiteren bevorzugten Ausführungsform der erfindungsgemäßen Trennrahmen-Vorrichtung ist der obere Trennholm des zweiten Rahmenabschnittes bezüglich der Bodenbefestigung in einem stumpfen Winkel zur Liegefläche angeordnet.

Der untere Trennholm des zweiten Rahmenabschnittes ist im Gegensatz dazu bezüglich der Bodenbefestigung vorzugsweise in einem spitzen Winkel zur Liegefläche angeordnet.

Gemäß einer wichtigen bevorzugten Ausführungsform der erfindungsgemäßen Trennrahmen-Vorrichtung sind der obere Trennholm und der untere Trennholm so nah zueinander beabstandet, um gemeinsam eine nicht-intrudierbare robuste einheitliche Trennebene zu einer benachbarten Stallbox zu bilden.

Ein zwischen zwei mutuell entgegengesetzt gekrümmten Knickstellen angeordneter Übergangsbereich zwischen dem unteren Trennholm und dessen Weiterführung in den ersten Rahmenabschnitt ist vorzugsweise gerade ausgeführt und verläuft bezüglich der Bodenbefestigung in einem spitzen Winkel zur Liegefläche.

Der Übergangsbereich zwischen dem unteren Trennholm und dessen Weiterführung in den ersten Rahmenabschnitt weist dabei vorzugsweise eine Länge auf, die auf 1/5 bis auf 1/10 der Länge des oberen Trennholms bemessen ist.

Ein Übergangsbereich zwischen dem oberen Trennholm und dessen Weiterführung in den ersten Rahmenabschnitt kann beispielsweise von einem Kurvenabschnitt mit einheitlichem Krümmungsradius gebildet sein.

Die erfindungsgemäße Trennrahmen-Vorrichtung wird im Folgenden anhand einer bevorzugten Ausführungsform erläutert, die in der Figur der Zeichnung dargestellt ist. Darin zeigen:
- Fig. 1: eine bevorzugte Ausführungsform der erfindungsgemäßen Trennrahmen-Vorrichtung in einer Seitenansicht;
- Fig. 2: in Fig. 1 dargestellte bevorzugte Ausführungsform der erfindungsgemäßen Trennrahmen-Vorrichtung in einer Ansicht von vorne.

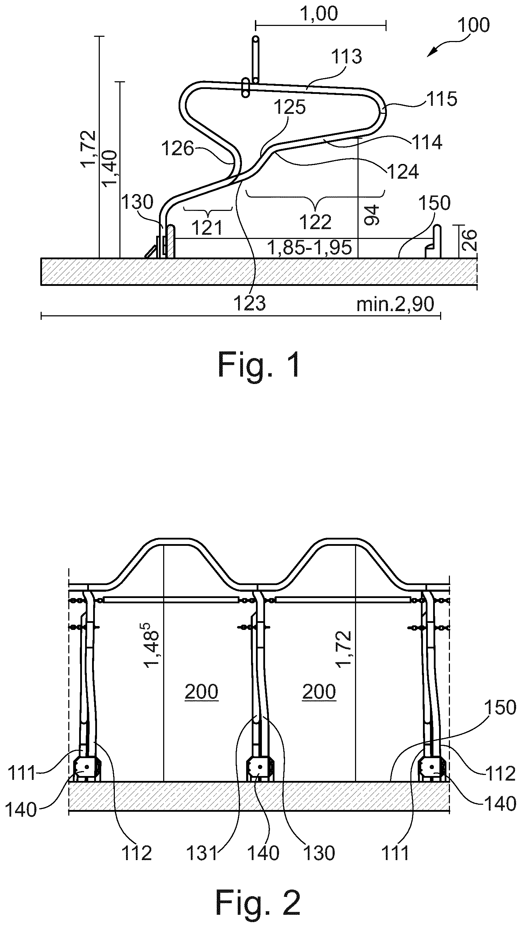

Die in den Figuren 1 dargestellte erfindungsgemäße Trennrahmen-Vorrichtung 100 für Stallboxen ist zur Haltung von Kühen auf begrenztem Areal vorgesehen und enthält einen zu einem Trennrahmen 110 gebogenen, in eine Mehrzahl unterschiedlicher Rahmenabschnitte unterteilten Holm 113, 114, der mittels seitlichen Biegens seiner beiden Enden 111, 112 einen Seitenversatz aufweist derart, dass deren beide Enden 111, 112 im Bereich einer Bodenbefestigung 140 nebeneinander zu liegen kommen.

Die beiden Enden 111, 112 sind im Bereich jeweiliger, im Wesentlichen vertikal ausgerichteter Stützholme 130, 131 nebeneinander in der Bodenbefestigung 140 verankert, wobei der Trennrahmen 110 einen oberen Trennholm 113 und einen zu diesem in vorgegebenem Abstand angeordneten unteren Trennholm 114 aufweist, die über eine der Bodenbefestigung 140 ferne Umkehrbiegung 115 miteinander verbunden sind.

Die Länge des ersten Rahmenabschnittes 121 ist auf etwa 1/3 der Länge des zweiten Rahmenabschnittes 122 bemessen, wobei der erste Rahmenabschnitt 121 bezüglich der Bodenbefestigung 140 in einem spitzen Winkel zur Liegefläche 150 angeordnet ist.

Der obere Trennholm 113 des zweiten Rahmenabschnittes 122 ist bezüglich der Bodenbefestigung 140 in einem stumpfen Winkel zur Liegefläche 150 angeordnet, und der untere Trennholm 114 des zweiten Rahmenabschnittes 122 ist bezüglich der Bodenbefestigung 140 in einem spitzen Winkel zur Liegefläche 150 angeordnet.

Der obere Trennholm 113 und der untere Trennholm 114 sind so nah zueinander beabstandet, dass sie gemeinsam eine nicht-intrudierbare robuste einheitliche Trennebene zu einer benachbarten Stallbox 200 bilden.

Ein zwischen zwei mutuell entgegengesetzt gekrümmten Knickstellen angeordneter Übergangsbereich zwischen dem unteren Trennholm 114 und dessen Weiterführung in den ersten Rahmenabschnitt 121 ist gerade ausgeführt und verläuft dabei bezüglich der Bodenbefestigung 140 in einem spitzen Winkel zur Liegefläche 150.

Der Übergangsbereich 125 zwischen dem unteren Trennholm 114 und dessen Weiterführung in den ersten Rahmenabschnitt 121 weist dabei eine Länge auf, die etwa auf 1/6 der Länge des oberen Trennholms 113 bemessen ist.

Ein Übergangsbereich 125 zwischen dem oberen Trennholm 113 und dessen Weiterführung in den ersten Rahmenabschnitt 121 ist von einem Kurvenabschnitt 126 mit einheitlichem Krümmungsradius gebildet.

Die Figur 2 zeigt zwei benachbarte Stallboxen, die mittels der erfindungsgemäßen Trennwand-Vorrichtung voneinander getrennt sind, wobei drei parallel zueinander orientierte Trennwände mittels eines nach oben gebogenen Aussteifungsrohres robust miteinander verbunden sind, wobei die obere Biegung des Aussteifungsrohres eine für einen natürlichen Bewegungsablauf eines Stalltieres notwendige Nackenfreiheit bewirkt.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

### Bezugszeichenliste

- 100: Trennrahmen-Vorrichtung
- 110: Trennrahmen
- 111, 112: Enden
- 113: oberer Trennholm
- 114: unterer Trennholm
- 115: Umkehrbiegung
- 121: erster Rahmenabschnitt
- 122: zweiter Rahmenabschnitt
- 123, 124: Knickstellen
- 125: Übergangsbereich
- 126: Kurvenabschnitt
- 130, 131: vertikal ausgerichtete Stützholme
- 140: Bodenbefestigung
- 150: Liegefläche
- 200: Stallboxen

## Patentansprüche

1. Trennrahmen-Vorrichtung (100) für Stallboxen (200) zur Haltung von Stalltieren, insbesondere Kühen, mit einem zu einem Trennrahmen (110) gebogenen, in eine Mehrzahl unterschiedlicher Rahmenabschnitte (121, 122) unterteilten Holm (113, 114), der mittels seitlichen Biegens seiner beiden Enden (111, 112) einen Seitenversatz aufweist derart, dass die beiden Enden (111, 112) im Bereich einer Bodenbefestigung (140) nebeneinander zu liegen kommen und im Bereich jeweiliger, im Wesentlichen vertikal ausgerichteter Stützholme (130, 131) nebeneinander in der Bodenbefestigung (140) verankert sind, wobei der Trennrahmen (110) einen oberen Trennholm (113) und einen zu diesem in vorgegebenem Abstand angeordneten unteren Trennholm (114) aufweist, die über eine der Bodenbefestigung (140) ferne Umkehrbiegung (115) miteinander verbunden sind, **dadurch gekennzeichnet, dass**
- der obere Trennholm (113) und der untere Trennholm (114) in einem der Bodenbefestigung (140) nahen ersten Rahmenabschnitt (121) parallel zueinander geführt sind und dabei lediglich so weit von einer Liegefläche (150) eines Stalltieres beabstandet sind, um ein freies Verschwenken des Kopfes des Stalltieres auch oberhalb des ersten Rahmenabschnittes (121) zu ermöglichen, und
- in einem zweiten Rahmenabschnitt (122) der obere Trennholm (113) und der untere Trennholm (114) so weit von einer Liegefläche (150) des Stalltieres beabstandet sind, um ein wiederholtes Aufstehen, freies Stehen und anschließendes Hinlegen des Stalltieres innerhalb der Stallbox (200) sowie eine uneingeschränkte Bewegung des Stalltieres innerhalb der Stallbox (200) zu ermöglichen, wobei
- der erste Rahmenabschnitt (121) bezüglich der Bodenbefestigung (140) in einem spitzen Winkel zur Liegefläche (150) angeordnet ist, und des Weiteren
- ein zwischen zwei mutuell entgegengesetzt gekrümmten Knickstellen (123, 124) angeordneter Übergangsbereich (125) zwischen dem unteren Trennholm (114) und dessen Weiterführung in den ersten Rahmenabschnitt (121) gerade ausgeführt ist und bezüglich der Bodenbefestigung (140) in einem spitzen Winkel zur Liegefläche (150) verläuft, wobei
- der Übergangsbereich (125) zwischen dem unteren Trennholm (114) und dessen Weiterführung in den ersten Rahmenabschnitt (121) eine Länge aufweist, die auf 1/5 bis auf 1/10 der Länge des oberen Trennholms (113) bemessen ist.

2. Trennrahmen-Vorrichtung nach Anspruch 1, **dadurch gekennzeichnet, dass** die Länge des ersten Rahmenabschnittes (121) auf 1/4 bis 1/2 der Länge des zweiten Rahmenabschnittes (122) bemessen ist.

3. Trennrahmen-Vorrichtung nach einem der vorhergehenden Ansprüche, **dadurch gekennzeichnet, dass** der untere Trennholm (114) des zweiten Rahmenabschnittes (122) bezüglich der Bodenbefestigung (140) in einem spitzen Winkel zur Liegefläche (150) angeordnet ist.

4. Trennrahmen-Vorrichtung nach einem der vorhergehenden Ansprüche, **dadurch gekennzeichnet, dass** der obere Trennholm (113) und der untere Trennholm (114) so nah zueinander beabstandet sind, um gemeinsam eine nicht-intrudierbare, robuste, einheitliche Trennebene zu einer benachbarten Stallbox (200) zu bilden.

5. Trennrahmen-Vorrichtung nach einem der vorhergehenden Ansprüche, **dadurch gekennzeichnet, dass** ein Übergangsbereich (125) zwischen dem oberen Trennholm (113) und dessen Weiterführung in den ersten Rahmenabschnitt (121) von einem Kurvenabschnitt (126) mit einheitlichem Krümmungsradius gebildet ist.

## Geänderte Patentansprüche

### Geänderte Patentansprüche gemäss Regel 137(2) EPÜ.

1. Trennrahmen-Vorrichtung (100) für Stallboxen (200) zur Haltung von Stalltieren, insbesondere Kühen, mit einem zu einem Trennrahmen (110) gebogenen, in eine Mehrzahl unterschiedlicher Rahmenabschnitte (121, 122) unterteilten Holm (113, 114), der mittels seitlichen Biegens seiner beiden Enden (111, 112) einen Seitenversatz aufweist derart, dass die beiden Enden (111, 112) im Bereich einer Bodenbefestigung (140) nebeneinander zu liegen kommen und im Bereich jeweiliger, im Wesentlichen vertikal ausgerichteter Stützholme (130, 131) nebeneinander in der Bodenbefestigung (140) verankert sind, wobei der Trennrahmen (110) einen oberen Trennholm (113) und einen zu diesem in vorgegebenem Abstand angeordneten unteren Trennholm (114) aufweist, die über eine der Bodenbefestigung (140) ferne Umkehrbiegung (115) miteinander verbunden sind, **dadurch gekennzeichnet, dass**
- der obere Trennholm (113) und der untere Trennholm (114) in einem der Bodenbefestigung (140) nahen ersten Rahmenabschnitt (121) parallel zueinander geführt sind und dabei lediglich so weit von einer Liegefläche (150) eines Stalltieres beabstandet sind, um ein freies Verschwenken des Kopfes des Stalltieres auch oberhalb des ersten Rahmenabschnittes (121) zu ermöglichen, und
- in einem zweiten Rahmenabschnitt (122) der obere Trennholm (113) und der untere Trennholm (114) so weit von einer Liegefläche (150) des Stalltieres beabstandet sind, um ein wiederholtes Aufstehen, freies Stehen und anschließendes Hinlegen des Stalltieres innerhalb der Stallbox (200) sowie eine uneingeschränkte Bewegung des Stalltieres innerhalb der Stallbox (200) zu ermöglichen, wobei
- der erste Rahmenabschnitt (121) bezüglich der Bodenbefestigung (140) in einem spitzen Winkel zur Liegefläche (150) angeordnet ist.
